# EUROPEAN PATENT APPLICATION

(11) **EP 0 937 642 A2**
(43) Date of publication of application: **25.08.1999**
(21) Application number: 98500281.5
(22) Date of filing: 28.12.1998
(51) Int. Cl.: B64C 9/30, B64C 9/18, B64C 9/10

(54) **Flight controls with automatic balance**

(30) Priority: 14.01.1998 ES 9800049
(71) Applicant: Munoz Saiz, Manuel, E-28017 Madrid (ES)
(72) Inventor: Munoz Saiz, Manuel, E-28017 Madrid (ES)

(57) **Abstract**

Flight controls with automatic balance that consists of ailerons divided into two parts, which at low speed adopt the shape of a conventional aileron and rotate in their entirety with the same degree and at high speeds, a part of it rotates or extends to a determinated angle by means of the actuator and the other part of the aileron, that is hinged or articulated to the main part of the aileron, rotates with reference to the main part as a function of the air speed pressure, opposing to this rotation by means of one or more springs.

## Description

TECHNICAL FIELD.- This invention relates to a flight control system for use in an aircraft which compensates aerodinamically the amount of deflexion requiered to provide such a control in response to the variations in airspeed or fluid pressure.

BACKGROUND ART.- Aircraft flight controls take the form of primary and secondary surfaces which are hinged to the trailing or aft portion of directional, horizontal stabilizer members and wings on the aircraft, such members may include ailerons, elevators, rudders and flaps. The orientation of these flight controls is changed by means of an hydraulic, pneumatic or electric system which are operated by the pilot o autopilot, by means of one or two actuators but in most of these systems are used two one piece ailerons or surfaces, one operates always and the other only acts at low speed or otherwise their extension is changed as a function of the airspeed, it is reduced as the airspeed increases, other like flaps are acted manually by steps or stages, in all cases the deflexion is increased as the airspeed decreases.

DESCRIPTION OF THE INVENTION.- Flight controls with automatic balance for use in control the movement of an aircraft through a fluid system, said control system consists of ailerons divided into two parts, which at low speed adopt the shape of a conventional aileron and rotate in their entirety with the same degree and at high speeds, a part of it rotates or extends to a determinated angle by means of the actuator and the other part of the aileron, that is hinged or articulated to the main part of the aileron, rotates with reference to the main part as a function of the air speed pressure, opposing to this rotation by means of one or more springs.

The mechanical resistance of springs as required are exponential but they may be linear or other desired, operating throughout the movement or only in a low or high-speed zone.

The two pieces ailerons use springs and adopt the form of a variable thickness aerodynamic profile.

The ailerons may be hollow or compacted, of variable cross-section, tapering toward the trailing edge. Both have an aerodynamic profile with hollow ailerons, hot air is made to flow through them to heat them, emerging through holes.

If it is a flap, at high speed, because of dynamic air pressure they retract completely, so that, together with the wing, they form an aerodynamic profile. The flaps may also be of rigid design, articulated from the wing and turning on a shaft and springs or strips so that, similarly they are extended at low speed, and retracted at high speed.

The flap size, whether of one or more elements, provides a large surface, to allow for greater lift without the need for leading edge flaps.

Using rotating flaps around a tubular shaft, this is joined by means of a cardan to the shaft of the symmetrical flap to avoid asymmetry.

Provided that springs are closed to the rotating shaft they provide its safe use.

An additional over-center spring can hold fix the aileron.

Provided that this system acts automatically and with the use of only some springs, some devices and controls used to control the secondary or low speed surfaces are avoided. It is sure, simple and economical.

### BRIEF DESCRIPTION OF THE DRAWINGS.

Figure 1, shows a partial, side and schematic cross-section view of the device in the invention with a rudder, elevator or aileron.
Figure 2 shows a partial and schematic, cross-section view of a wing with an articulated flap using springs.
Figure 3 shows a lateral, schematic cross-section view of a wing with an articulated flap using a strip type spring, along the union between the flap and the wing.
Figure 4 shows a side, schematic, cross-section view of a wing with an articulated flap using one variant of springs, some inside the lower surface and the other inside the upper surface.
Figure 5 shows a side, schematic cross-section view of a wing with a rigid lower surface flap with a strip type spring fastened at the lower surface.
Figure 6 shows a side schematic cross-section view of a wing with a rigid, hinged lower surface flap, using one variant of springs.

### BRIEF DESCRIPTION OF THE DRAWINGS

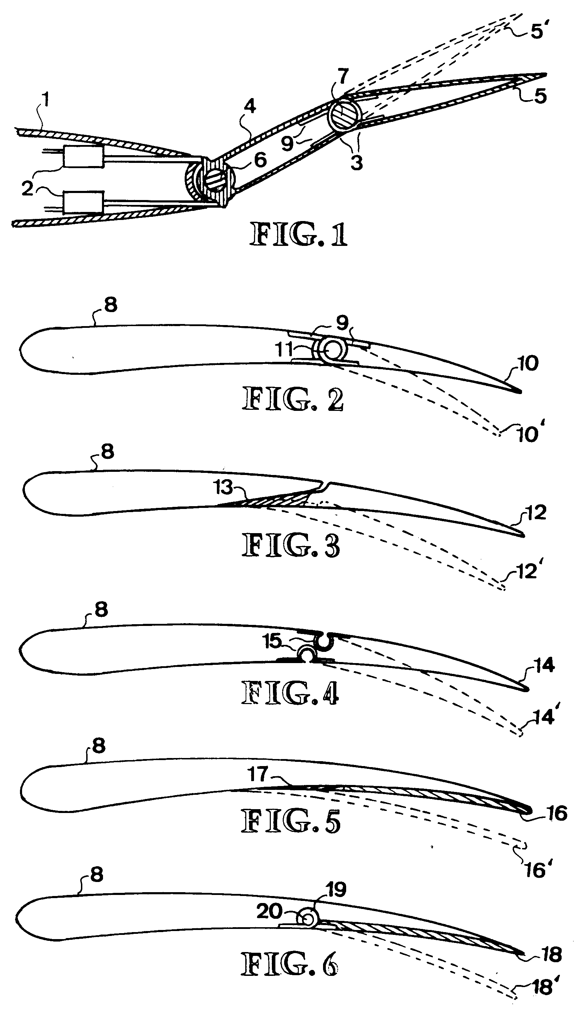

Figure 1 consists of the vertical, horizontal stabilizer or wing 1, the hydraulic actuators 2, the rudder, elevator or aileron 3, the main part of the aileron, rudder or elevator 4, the secondary part of the ailerons at high-speed 5 and at low-speed 5', the rotatory shafts 6 and 7 and the springs 9.
Figure 2 consists of the wing 8, the springs 9, the flap at high-speed 10 and at low-speed 10' and the rotatory shaft 11. It disposes the shaft surrounded by a plurality of springs that act against the inside of the lower and upper surfaces.
Figure 3 consists of the wing 8, the flap at high-speed 12 and at low-speed 12' and the strip 13. It has a strip on the lower zone between the wing and the flap and along its length.
Figure 4 consists of the wing 8, the flap at high-speed 14 and at low-speed 14' and the springs 15 inside the lower and upper surface. It has a plurality of springs between the wing and the flap.
Figure 5 consists of the wing 8, the flap at high-speed 16 and at low-speed 16' and the strip 17. It uses an extended strip between the wing and the lower surface flap in its lower zone.
Figure 6 consists of the wing 8, the flap at high-speed 18 and at low-speed 18', the spring 19 and its rotating shaft 20. It has a plurality of springs between the wing and the lower surface flap and around the rotating shaft.

## Claims

1. Flight controls with automatic balance that consists of ailerons divided into two parts, which at low speed adopt the shape of a conventional aileron and rotate in their entirety with the same degree and at high speeds, a part of it rotates or extends to a determinated angle by means of the actuator and the other part of the aileron, that is hinged or articulated to the main part of the aileron, rotates with reference to the main part as a function of the air speed pressure, opposing to this rotation by means of one or more springs.

2. Flight controls with automatic balance according to claim 1, wherein the mechanical resistance of springs is exponential.

3. Flight controls with automatic balance according to claim 1, wherein the flaps type aileron toghether with the wing form an aerodynamic profile and actuators are not needed, said flaps articulated from the wing and turning on a shaft or strip, so that, similarly they are extended at low speed, and retracted at high speed.

4. Flight controls with automatic balance according to claim 1, wherein the flap type aileron is rotating around a tubular shaft, that is joined by means of a cardan to the shaft of the symmetrical flap.

5. Flight controls with automatic balance according to claim 1, wherein the flap type aileron has the shaft surrounded by a plurality of springs that act against the inside of the lower and upper surfaces.

6. Flight controls with automatic balance according to claim 1, wherein the flap type aileron has a extended strip between the wing and the flap in its lower zone.

7. Flight controls with automatic balance according to claim 1, wherein the flap type aileron has a plurality of springs between the wing and the flap, some springs inside the lower surface and the other inside the upper surface.

8. Flight controls with automatic balance according to claim 1, wherein the flap type aileron has an extended strip between the wing and the lower surface flap in its lower zone.

9. Flight controls with automatic balance according to claim 1, wherein the flap type aileron has a plurality of springs between the wing and the lower surface flap and around the rotating shaft.
